# EUROPÄISCHE PATENTSCHRIFT

(11) **EP 2 772 067 B1**
(45) Veröffentlichungstag und Bekanntmachung des Hinweises auf die Patenterteilung: **06.04.2016**
(21) Anmeldenummer: 12761918.7
(22) Anmeldetag: 15.08.2012
(51) Int. Cl.: H04R 1/10, B65H 75/44, H02G 11/02

(54) **VORRICHTUNG ZUR AUFBEWAHRUNG EINES KOPF- ODER OHRHÖRERS**
APPARATUS FOR STORING HEADPHONES OR EARPHONES
DISPOSITIF POUR RANGER UN ÉCOUTEUR OU UNE OREILLETTE

(43) Veröffentlichungstag der Anmeldung: 03.09.2014
(73) Patentinhaber: Athos Holding GmbH, 58515 Lüdenscheid (DE)
(72) Erfinder: STEINMÜLLER, Jörg, 58540 Meinerzhagen (DE); KLEINDOPP, Günter, 58849 Herscheid (DE); GLOMB, Martin, 58332 Schwelm (DE)
(74) Vertreter: Patentanwälte Dörner & Kötter PartG mbB
(86) Internationale Anmeldenummer: PCT/EP2012/065973
(87) Internationale Veröffentlichungsnummer: WO 2014/026716

(56) Entgegenhaltungen:
- WO-A1-00/68131
- WO-A1-01/43491
- WO-A1-03/043373
- CH-A2- 700 893
- DE-A1- 19 523 178
- GB-A- 2 469 302
- JP-A- 61 065 698

## Beschreibung

Die Erfindung betrifft eine Vorrichtung zur Aufbewahrung eines Kopfhörers oder Ohrhörers nach dem Patentanspruch 1 oder 2.

Als Mobiltelefon kommen zunehmend so genannte Smartphones zum Einsatz. Hierbei handelt es sich um kleine transportable Computer mit der zusätzlichen Funktionalität eines Mobiltelefons. Smartphones werden regelmäßig mit Ohrhörern ausgeliefert, welche oftmals ein integriertes Mikrofon aufweisen, so dass sie als Headset einsetzbar sind. Diese Ohrhörer werden von den Anwendern häufig sowohl zum Telefonieren als auch zum Musikhören oder zum Spielen von Videospielen auf dem Smartphone eingesetzt. Hierzu werden die Ohrhörer regelmäßig mitgeführt. Dabei besteht zunehmend die Problematik, dass das Kabel des Ohrhörers verheddert, oftmals auch zusammen mit weiteren schnurartigen Gegenständen, welche sich in derselben Tasche befinden. Auch kann es zu einem Verknicken des Kabels kommen, was einen Kabelbruch zur Folge haben kann. In der WO 01/43491 A1 sowie der JP 61 065698 A wurden bereits Vorrichtungen zur Aufbewahrung eines Ohrhörers beschrieben.

Hier will die Erfindung Abhilfe schaffen. Der Erfindung liegt die Aufgabe zugrunde, eine Vorrichtung zur Aufbewahrung eines Kopfhörers oder Ohrhörers zu schaffen, welche ein geordnetes und geschütztes Mitführen des Kopfhörers bzw. des Ohrhörers ermöglicht und gleichzeitig den Kopfhörer bzw. Ohrhörer bei Bedarf einfach bereitstellt. Gemäß der Erfindung wird diese Aufgabe durch die Merkmale der Patentansprüche 1 oder 2 gelöst.

Mit der Erfindung ist eine Vorrichtung zur Aufbewahrung eines Kopfhörers oder Ohrhörers geschaffen, welche ein geordnetes und geschütztes Mitführen eines Kopfhörers oder Ohrhörers ermöglicht und gleichzeitig den Kopfhörer bzw. den Ohrhörer bei Bedarf einfach bereitstellt. Das mitgelieferte Kabel ist auf die drehbar gelagerte Wickelspule aufwickelbar, wobei der Miniklinkenstecker des Kopfhörers bzw. Ohrhörers durch die Durchführung der oberen Scheibe durchgeführt werden kann. Der Miniklinkenstecker befindet sich somit außerhalb der Vorrichtung und kann so unkompliziert mit dem entsprechenden Steckkontakt des Smartphones verbunden werden.

Die obere Scheibe weist auf ihrer Oberseite eine Aufnahme für einen Miniklinkenstecker auf. Hierdurch ist eine geordnete Aufbewahrung des endseitig an dem Kopf- bzw. Ohrhörers angeordneten Miniklinkensteckers ermöglicht. Vorteilhaft ist die Aufnahme durch zwei auf der Oberseite der oberen Scheibe parallel zueinander angeordnete Rastarme gebildet, zwischen denen der Miniklinkenstecker fixierbar ist.

Die obere Scheibe weist auf ihrer Oberseite einen umlaufenden, vorzugsweise einen Kreisbogen beschreibenden Steg auf, in den eine Auslassöffnung für ein Kabel eingebracht ist und der einen Aufnahmeraum für einen Miniklinkenstecker begrenzt. Hierdurch ist ein separater Aufbewahrungsraum für den Miniklinkenstecker eines Kopf- bzw. Ohrhörers gebildet.

In einer ersten Ausgestaltung der Erfindung ist die Ausnehmung der oberen Scheibe durch einen Schlitz gebildet, der sich zwischen zwei gegenüberliegenden Stellen des umlaufenden Steges erstreckt und dessen Breite so dimensioniert ist, dass ein Miniklinkenstecker durchführbar ist. Hierdurch ist die Durchführung des Miniklinkensteckers eines Kopf- bzw. Ohrhörers zum nachfolgenden Aufwickeln des Kabels erleichtert. Hierzu ist bevorzugt unterhalb des Schlitzes in der unteren Scheibe parallel zu dem Schlitz eine Führung für einen Miniklinkenstecker in Form einer Einbuchtung angeordnet.

In einer zweiten Ausgestaltung der Erfindung ist die Durchführung der oberen Scheibe durch eine Bohrung gebildet, wobei in die untere Scheibe eine mit dieser Bohrung fluchtende Ausnehmung eingebracht ist, die in einer Position der Wickelspule mit einer in die Grundplatte eingebrachten Durchführung derart fluchtet, dass in dieser Position der Wickelspule ein Miniklinkenstecker durch die Ausnehmungen geführt durch die Bohrung der oberen Scheibe in den Aufnahmeraum einführbar ist. Hierdurch ist das Einfädeln des Miniklinkensteckers eines Kopf- bzw. Ohrhörers in die Vorrichtung zum nachfolgenden Aufwickeln des Kabels erleichtert.

In Weiterbildung der Erfindung weist die Achse an ihrem freien Ende Rastnasen auf, mittels der die Wickelspule axial auf der Achse fixiert ist. Hierdurch ist eine einfache Montage der Vorrichtung bewirkt. Die Wickelspule ist nach Aufstecken auf die Achse nach Überwindung der Rastnasen automatisch axial gesichert.

In Ausgestaltung der Erfindung weist die Grundplatte zumindest bereichsweise umlaufend eine Außenwandung auf, die eine Auslassöffnung aufweist und die den Umfang der oberen Scheibe zumindest bereichsweise umgibt. Hierdurch ist eine Führung des aufzuwickelnden Kabels geschaffen, wobei der Wickelraum zwischen den beiden Scheiben der Wickelspule sowie der Außenwandung der Grundplatte begrenzt ist. Die Auslassöffnung ermöglicht ein Einführen des Kabels eines Kopf- bzw. Ohrhörers in die Vorrichtung, wobei die Lautsprecher außerhalb der Vorrichtung angeordnet sind, wodurch diese einfach erreichbar sind. Eine solche Anordnung ermöglicht zudem eine Einstellung der erforderlichen Länge des Kabels durch nur bereichsweises Ausziehen des Kabels an seinem lautsprecherseitigen Ende.

In weiterer Ausgestaltung der Erfindung weist die auf der der Grundplatte zugewandten Seite angeordnete untere Scheibe einen kleineren Außendurchmesser auf als die obere Scheibe. Hierdurch ist der zwischen Wickelspule und umlaufenden Außenrand der Grundplatte gebildete Aufnahmeraum nach außen hin vergrößert, wodurch ein Aufwickeln eines vorhandenen in das Kabel eines Ohrhörers integrierten Mikrofons ermöglicht ist.

In weiterer Ausgestaltung der Erfindung sind an der oberen Scheibe auf ihrer der unteren Scheibe abgewandten Oberseite Mulden und/oder Erhebungen zum manuellen Drehen der Wickelspule angeordnet. Hierdurch ist die Aufwicklung eines Kopf- bzw. Ohrhörers erleichtert.

Bevorzugt ist die Ausnehmung der unteren Scheibe sowie die Durchführung der Grundplatte jeweils durch eine der Ausnehmung der oberen Scheibe entsprechende Bohrung gebildet, von der ausgehend ein Schlitz bis zum Außenrand der unteren Scheibe bzw. der Grundplatte geführt ist. Hierdurch ist eine Durchführung des Miniklinkensteckers mit gleichzeitiger Einfädelung des Kabels in die Wickelspule ermöglicht.

In Weiterbildung der Erfindung ist der durch den Steg begrenzte Aufnahmeraum durch einen lösbar befestigten Deckel abgedeckt. Hierdurch ist ein verschließbarer Aufnahmeraum für den Miniklinkenstecker eines aufzunehmenden Kopf- bzw. Ohrhörers gebildet. Vorteilhaft kann dieser Deckel an seiner nach außen gerichteten Oberseite mit Mulden und/oder Erhebungen zum manuellen Drehen der Wickelspule versehen sein.

In Weiterbildung der Erfindung sind an dem Deckel an seiner den Rastarmen zugewandten Seite parallel zueinander zwei Stege angeformt, welche an den Rastarmen außen anliegen, wodurch ein Auslass für einen Miniklinkenstecker gebildet ist. Hierdurch ist eine gute Führung für den Miniklinkenstecker erzielt.

In weiterer Ausgestaltung der Erfindung weist die untere Scheibe an ihrer der Grundplatte zugewandten Seite eine Aufnahme für eine Feder, vorzugsweise eine Spiralfeder auf, wobei an der Grundplatte ein Feststellhebel angeordnet ist, über den die Wickelspule in verschiedenen Drehpositionen entgegen der Federkraft fixierbar ist. Hierdurch ist eine automatische Aufwicklung des Kabels eines Kopf- bzw. Ohrhörers bewirkt. Vorzugsweise sind an der unteren Scheibe umlaufend Rastkerben eingeformt, die mit dem Feststellhebel zusammenwirken und über welche die Wickelspule fixierbar ist.

In weiter Ausgestaltung der Erfindung ist die Grundplatte mit der Rückwand eines Smartphones oder mit der Rückwand einer Schutzhülle für ein Smartphone verbunden. Hierdurch ist eine integrierte Aufbewahrungsmöglichkeit für einen Kopf- bzw. Ohrhörer geschaffen. Dabei kann die Grundplatte vorzugsweise an das Smartphone oder die Schutzhülle eines Smartphones derart angeformt sein, dass sie gleichzeitig zumindest einen Teil der Rückwand des Smartphones bzw. der Schutzhülle bildet. Alternativ kann die Grundplatte auch mit dem Smartphone bzw. der Schutzhülle lösbar verbunden sein. Die Verbindung der Vorrichtung mit einer Schutzhülle für ein Smartphone birgt den Vorteil, dass eine Vorrichtung für mehrere Smartphones, welche von der Schutzhülle aufgenommen werden können, einsetzbar ist.

In Ausgestaltung der Erfindung weist die Grundplatte Rastmittel auf, die mit an dem Smartphone bzw. an der Schutzhülle angeordneten Rastmitteln lösbar verrastet sind. Hierdurch ist eine einfache Bestückung des Smartphone bzw. einer ein Smartphone aufnehmenden Schutzhülle ermöglicht.

In anderer Ausgestaltung der Erfindung ist an der Grundplatte wenigstens ein Flügel angeformt, der in eine an der Rückwand des Smartphones bzw. der Schutzhülle angeordnete Aufnahme einschiebbar ist. Auch hierdurch ist eine bedarfsmäßige Bestückung eines Smartphones bzw. einer ein Smartphone aufnehmenden Schutzhülle mit der Vorrichtung ermöglicht. Vorteilhaft sind vier um 90° jeweils zueinander versetzte Flügel angeordnet, welche die Grundplatte zu einer quadratischen Fläche ergänzen. Hierdurch ist eine Befestigung der Vorrichtung an dem Smartphone bzw. der ein Smartphone aufnehmenden Schutzhülle in vier jeweils um 90° verdrehte Positionen ermöglicht, wodurch eine optimale Ausrichtung des von der Vorrichtung aufgenommenen Miniklinkensteckers ermöglicht ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

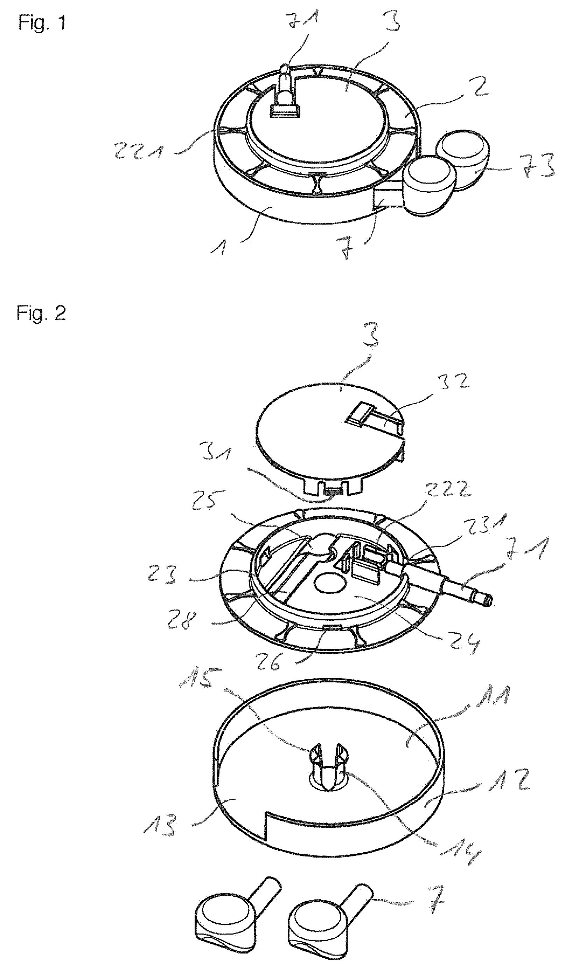

- Figur 1: die schematische räumliche Darstellung einer Aufbewahrungsvorrichtung für einen Ohrhörer für ein Smartphone;
- Figur 2: die Darstellung der Aufbewahrungsvorrichtung aus Figur 1 in Explosionsdarstellung mit angedeutetem Ohrhörer;
- Figur 3: die Darstellung der Aufbewahrungsvorrichtung aus Figur 1 in einer weiteren Explosionsdarstellung;
- Figur 4: die schematische räumliche Darstellung einer Aufbewahrungsvorrichtung für einen Ohrhörer für ein Smartphone in einer weiteren Ausführungsform;

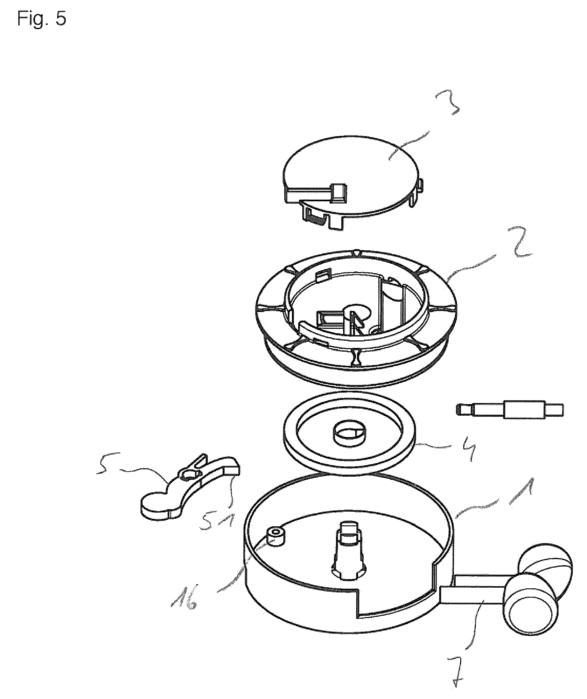

- Figur 5: die Darstellung der Aufbewahrungsvorrichtung aus Figur 4 in Explosionsdarstellung mit angedeutetem Ohrhörer;

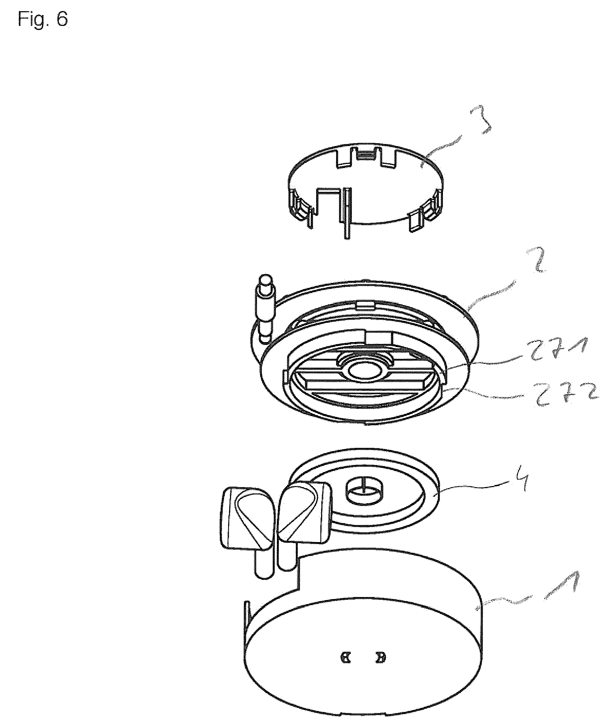

- Figur 6: die Darstellung der Aufbewahrungsvorrichtung aus Figur 4 in einer weiteren Explosionsdarstellung;
- Figur 7: die schematische räumliche Darstellung einer Aufbewahrungsvorrichtung für einen Ohrhörer mit angeformter Schutzhülle für ein Smartphone;
- Figur 8: die Darstellung der Aufbewahrungsvorrichtung aus Figur 7 in einer Ansicht von unten;

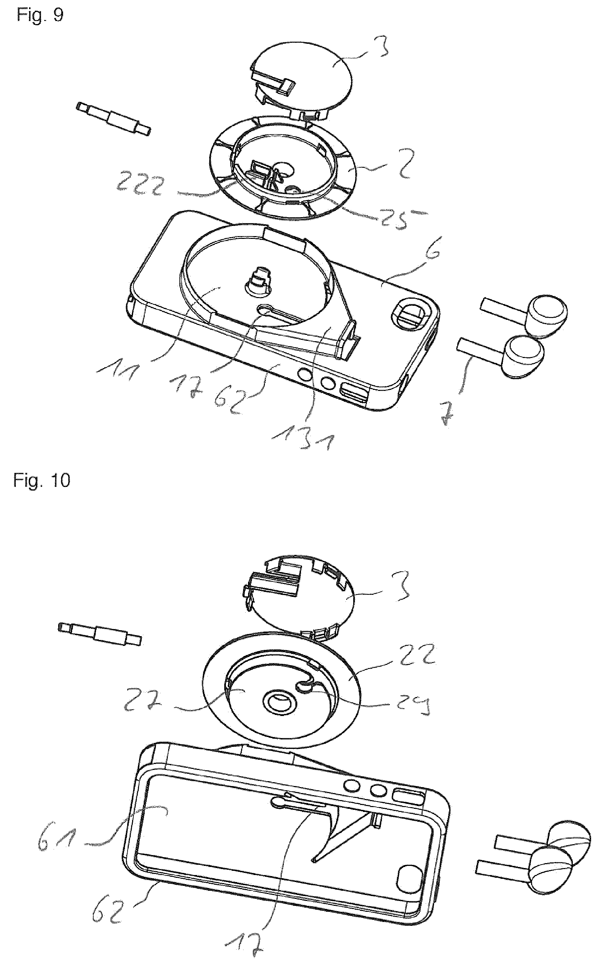

- Figur 9: die Darstellung der Aufbewahrungsvorrichtung aus Figur 7 in Explosionsdarstellung mit angedeutetem Ohrhörer;
- Figur 10: die Darstellung der Aufbewahrungsvorrichtung aus Figur 7 in einer weiteren Explosionsdarstellung;
- Figur 11: die schematische räumliche Darstellung einer Aufbewahrungsvorrichtung für einen Ohrhörer mit angeformter Schutzhülle für ein Smartphone in einer weiteren Ausführungsform;
- Figur 12: die Darstellung der Aufbewahrungsvorrichtung aus Figur 11 in einer Ansicht von unten;

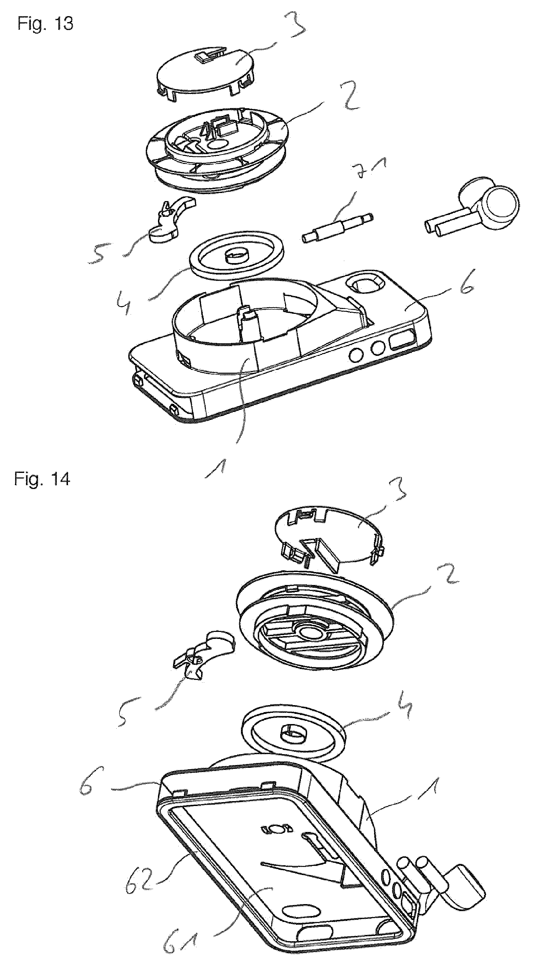

- Figur 13: die Darstellung der Aufbewahrungsvorrichtung aus Figur 11 in Explosionsdarstellung mit angedeutetem Ohrhörer;
- Figur 14: die Darstellung der Aufbewahrungsvorrichtung aus Figur 11 in einer weiteren Explosionsdarstellung;
- Figur 15: die schematische räumliche Darstellung einer lösbar mit einer Schutzhülle für ein Smartphone verbundenen Aufbewahrungsvorrichtung für einen Ohrhörer und
- Figur 16: die Darstellung der Aufbewahrungsvorrichtung aus Figur 15 in Explosionsdarstellung.

Die als Ausführungsbeispiel gewählte Vorrichtung zur Aufbewahrung eines Ohrhörers für ein Smartphone besteht im Wesentlichen aus einem becherförmigen Grundkörper 1, der eine Wickelspule 2 aufnimmt, welche einen Aufnahmeraum 24 für einen Klinkenstecker 71 aufweist, der über einen Deckel 3 verschlossen ist.

Der Grundkörper 1 ist im Ausführungsbeispiel als Kunststoffspritzgussteil hergestellt. Er besteht im Wesentlichen aus einer kreisscheibenförmigen Grundplatte 11, an die außen umlaufend eine kreisbogenförmige, orthogonal zur Grundplatte 11 angeordnete Außenwandung 12 angeformt ist, die an einer Seite eine Auslassöffnung 13 aufweist. Mittig ist auf der Grundplatte 11 orthogonal zu dieser eine Achse 14 angeformt. Die Achse 14 ist in Form eines geschlitzten Zylinders ausgeformt, der beidseitig des Schlitzes eine Rastnase 15 aufweist.

Die Wickelspule 2 ist ebenfalls als Kunststoffspritzgussteil hergestellt. Sie besteht im Wesentlichen aus zwei parallel zueinander angeordneten Scheiben 22, 27, welche beabstandet zueinander über eine zentrisch durch diese geführte hohlzylindrisch ausgebildete Achsaufnahme 21 verbunden sind. Die der Grundplatte 11 des Grundkörpers 1 zugewandte untere Scheibe 27 weist im Ausführungsbeispiel einen kleineren Durchmesser auf, als die gegenüberliegende obere Scheibe 22. Konzentrisch zur Achsaufnahme 21 ist auf der oberen Scheibe 22 ein kreisbogenförmiger Steg 23 angeformt, zwischen dessen Enden eine Auslassöffnung 25 gebildet ist. Umlaufend ist der Steg 23 mit Rastöffnungen 26 zur Aufnahme der Rastarme 31 des Deckels 3 versehen. Beabstandet zur Achsaufnahme 21 ist in der oberen Scheibe 22 eine schlitzförmige Ausnehmung 25 eingebracht, welche sich zwischen zwei gegenüberliegenden Stellen des umlaufenden Steges 23 erstreckt und deren Breite so dimensioniert ist, dass ein Miniklinkenstecker 71 längsseitig durchführbar ist.

Innerhalb des umlaufenden Steges 23 sind auf der oberen Scheibe 23 weiterhin zwei parallel zueinander angeordnete Rastarme 24 zur klemmenden Fixierung eines Miniklinkensteckers 71 angeformt. Außerhalb des durch den umlaufenden Steg 23 begrenzten Aufnahmeraums 24 sind auf der oberen Scheibe 22 umlaufend beabstandet Erhebungen 221 angeformt. Die Erhebungen 221 dienen der besseren Handhabung der Wickelspule 2 beim Aufwickeln eines Kabels 72 eines Ohrhörers 7.

Unterhalb der schlitzförmigen Ausnehmung 25 der oberen Scheibe 22 ist in der unteren Scheibe 27 eine entsprechend entlang der unteren Scheibe 27 verlaufende Einbuchtung 28 eingeformt. Die Einbuchtung 28 dient der Führung eines Miniklinkensteckers 71 bei der Durchführung in die Ausnehmung 25 der oberen Scheibe 22. Auf ihrer der Grundplatte 11 zugewandten Seite ist an der unteren Scheibe 27 umlaufend ein Rand 271 angeformt.

Der Deckel 3 ist in Form einer kreisrunden Kunststoffscheibe ausgebildet. Umlaufend des Deckels 3 sind orthogonal zu dieser in Richtung der Wickelspule 2 Rastarme 31 zum Eingriff in die Rastöffnungen 26 des Steges 23 angeformt. Weiterhin ist in dem Deckel 3 eine im Wesentlichen rechteckförmige Ausnehmung 32 eingebracht, dessen beiden Längsseiten mit an der dem Grundkörper 1 zugewandten Unterseite des Deckels 3 angeformten Stegen 33 versehen sind. Die Stege 33 sind derart an dem Deckel 3 angeordnet, dass sie im montierten Zustand des Deckels 3 außen an den Rastarmen 222 der Wickelspule 2 anliegen, wodurch ein dort eingeklemmter Miniklinkenstecker 71 zusätzlich fixiert ist.

Zur Aufbewahrung eines Ohrhörers 7 in der vorgenannt beschriebenen Vorrichtung wird zunächst die Wickelspule 2 derart gedreht, dass die Einbuchtung 28 der unteren Scheibe 27 mit der Auslassöffnung 13 des Grundkörpers 1 fluchtet. Anschließend wird der Miniklinkenstecker 21 des Ohrhörers 7 längs der Einbuchtung 28 eingeschoben und durch die schlitzförmige Ausnehmung 25 der oberen Scheibe 22 geführt und nachfolgend zwischen den Rastarmen 222 eingeklemmt. Anschließend wird der Deckel 3 auf der Wickelspule 2 befestigt, wobei dessen Rastarme 31 in die Rastöffnungen 26 des Steges 23 der Wickelspule 2 einrasten. Dabei liegen die Stege 33 des Deckels 3 außen an den Rastarmen 222 an. Anschließend wird durch Drehung der Wickelspule 2 um die Achse 14 des Grundkörpers 1 das Kabel 72 des Ohrhörers 7 auf die Wickelspule 2 aufgewickelt, bis die Lautsprecher 73 des Ohrhörers 7 an der Auslassöffnung 13 des Grundkörpers 1 anliegen. Zum Einsatz des Ohrhörers wird das Kabel 72 in der gewünschten Länge von der Wickelspule 2 abgewickelt und nachfolgend der Miniklinkenstecker 71 herausgezogen und mit dem Smartphone verbunden.

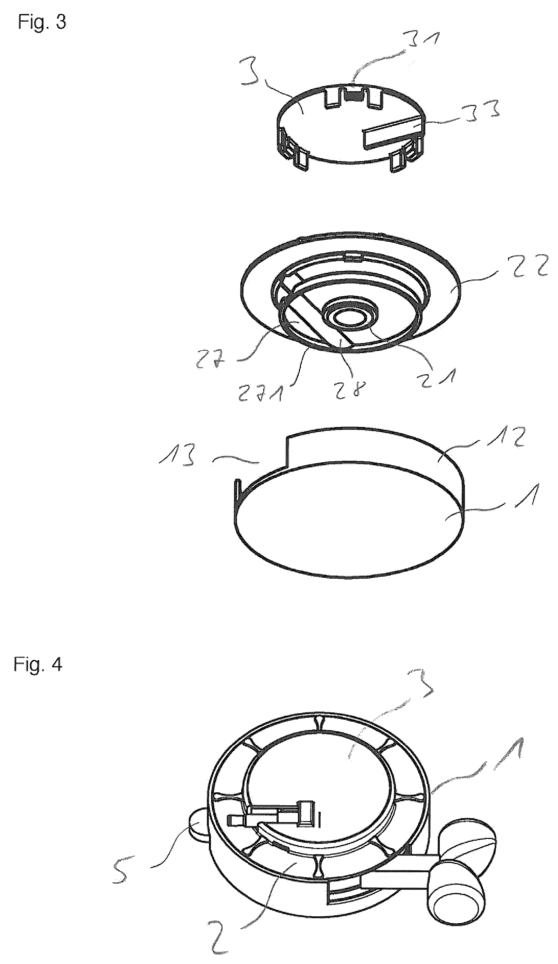

Im Ausführungsbeispiel gemäß Figur 4 ist die Aufnahmevorrichtung mit einem Federmechanismus versehen. Dabei ist zwischen der Wickelspule 2 und der Grundplatte 11 des Grundkörpers 1 eine Spiralfeder angeordnet und auf der Grundplatte 11 des Grundkörpers 1 ist ein Feststellhebel 5 an einer dort angeformten Hebelachse 16 schwenkbar angeordnet, derart, dass dessen Rastnase 51 in in dem umlaufenden Rand 271 der unteren Scheibe 27 der Wickelspule 2 eingebrachte Rastkerben 272 eingreift. Die Rastnase 51 ist dabei in bekannter Art und Weise derart ausgebildet, dass ein Eingriff nur bei Drehung der Wickelspule 2 entgegen der Kraft der Spiralfeder 4 erfolgt.

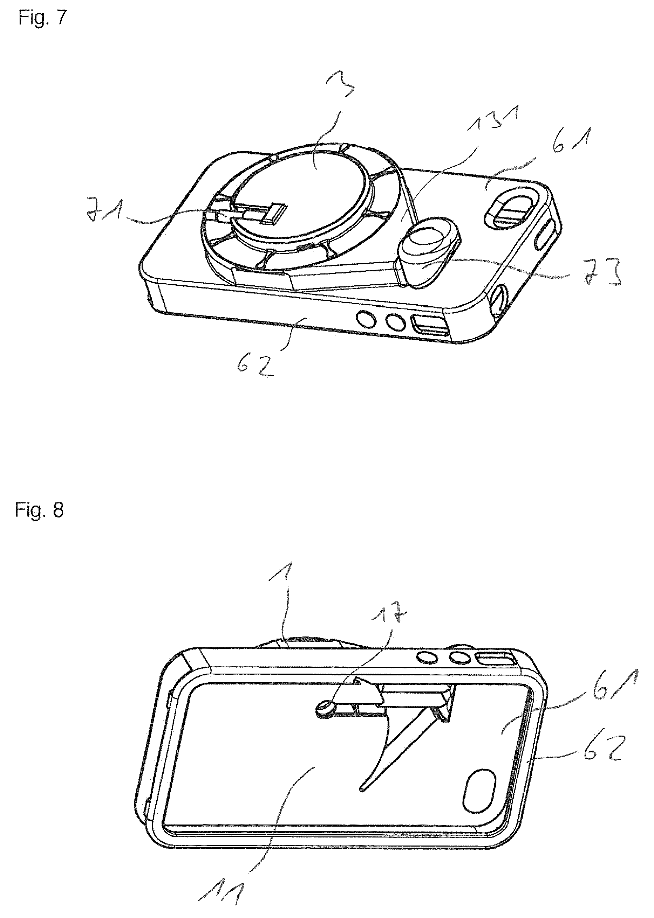

Im Ausführungsbeispiel gemäß Figur 7 ist der Grundkörper 1 der Aufbewahrungsvorrichtung einstückig an der Rückwand 61 einer Schutzhülle 6 für ein - nicht dargestelltes - Smartphone angeformt. Die Auslassöffnung 13 des Grundkörpers 1 ist hierbei durch einen angeformten Trichter 131 gebildet. Die Rückwand 61 sowie der Grundkörper 1 sind im Ausführungsbeispiel als einstückiges Kunststoffspritzgussteil ausgeführt. Die das - nicht dargestellte - Smartphone umgreifenden Seitenwände 62 sind aus einem flexiblen Elastomer gebildet. In dieser Ausführungsform ist die Grundplatte 11 des Grundkörpers 1 einstückig mit der Rückwand 61 der Schutzhülle 6. Zur Einführung des Kabels 72 eines Ohrhörers 7 ist in diesem Ausführungsbeispiel in der Grundplatte 11 eine Durchführung 17 in Form einer Bohrung eingebracht, welche in eine schlitzförmige Aussparung mündet. Die Ausnehmung 25 der oberen Scheibe 22 der Wickelspule 2 ist in diesem Ausführungsbeispiel ebenfalls durch eine Bohrung gebildet, wobei in die untere Scheibe 27 eine mit dieser Ausnehmung 25 fluchtende Ausnehmung 29 eingebracht ist, welche ebenfalls durch eine der Bohrung der oberen Scheibe 22 entsprechende Bohrung gebildet ist, von der ausgehend ein Schlitz bis zum Außenrand der unteren Scheibe 27 geführt ist. Zur Einführung des Miniklinkensteckers 71 eines Ohrhörers 7 wird die Wickelspule 2 derart gedreht, bis die Ausnehmungen 25, 29 der Wickelspule 2 mit der Durchführung 17 der Grundplatte 11 fluchten. Nachfolgend kann der Miniklinkenstecker 71 in den Aufnahmeraum 24 der oberen Scheibe 22 eingeführt werden und zwischen den Rastarmen 22 fixiert werden.

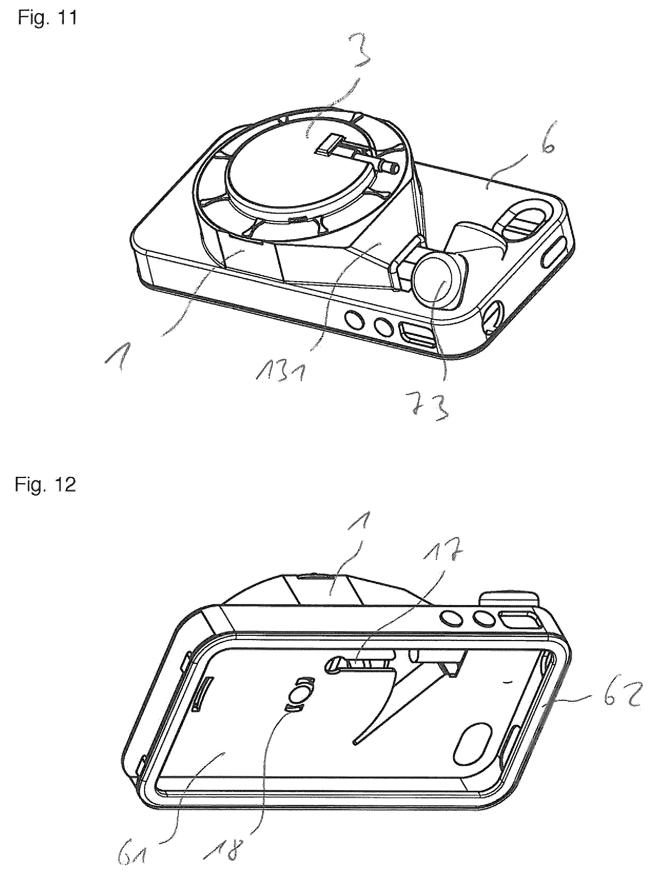

Im Ausführungsbeispiel gemäß Figur 11 ist die Aufbewahrungsvorrichtung in vorgenannter Art und Weise mit einem Federmechanismus versehen, wobei die Spiralfeder 7 in zwei konzentrisch zur Achse 14 in die Grundplatte 11 eingebrachte Durchbrüche 18 fixiert ist.

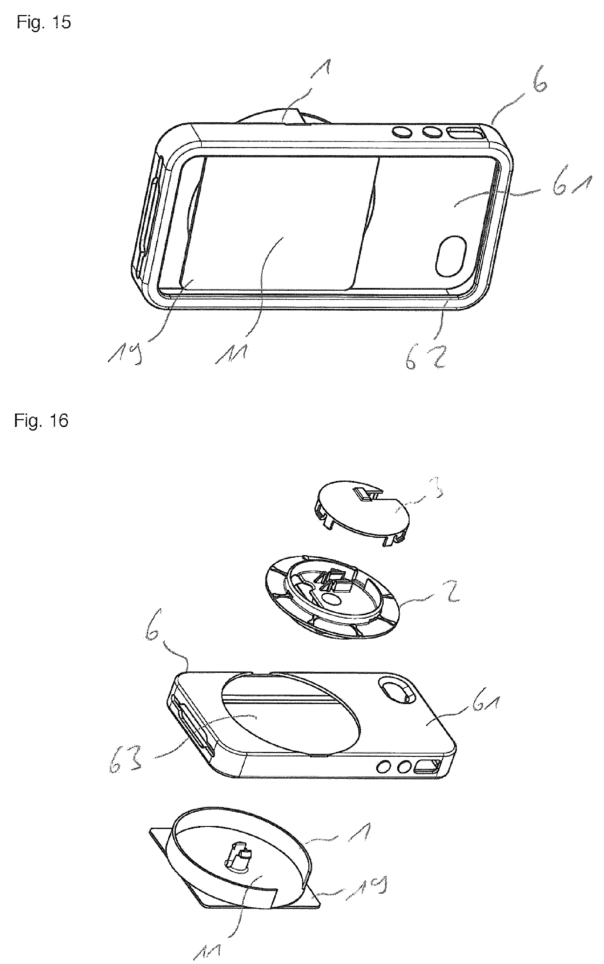

Im Ausführungsbeispiel gemäß Figur 15 ist die Grundplatte 11 des Grundkörpers 1 mit vier um 90° versetzt angeordneten Flügeln 19 versehen, so dass eine quadratische Grundfläche gebildet ist. Der Grundkörper ist mit seiner Außenwandung 12 durch eine kreisrunde Ausnehmung 63 einer Schutzhülle 6 geführt, so dass die Flügel 19 an der Rückwand 61 der Schutzhülle 6 anliegen. Nachfolgend ist die Wickelspule 2 auf die Achse 14 des Grundkörpers 1 aufgesteckt und der Deckel 3 ist in zuvor beschriebener Art und Weise auf der Wickelspule 2 befestigt. Diese lösbare Befestigung der erfindungsgemäßen Aufbewahrungsvorrichtung an einer Schutzhülle 6 zur Aufnahme eines Smartphones bietet den Vorteil, dass diese in unterschiedlichen Orientierungen positioniert werden kann, je nach gewünschter Ausrichtung des Miniklinkensteckers 71 bzw. der Lautsprecher 73 eines aufgenommenen Ohrhörers 7.

Der Gegenstand der vorliegenden Erfindung ist nicht auf die Aufbewahrung von Kopf- oder Ohrhörern beschränkt. Es ist beispielsweise auch möglich, das ebenfalls mit einem Smartphone gelieferte Ladekabel in einer solchen Vorrichtung aufzubewahren.

## Patentansprüche

1. Vorrichtung zur Aufbewahrung eines Kopfhörers oder Ohrhörers, umfassend eine Grundplatte (11) mit einer orthogonal zu dieser angeformten Achse (14), auf der eine Wickelspule (2) drehbar gelagert ist, wobei die Wickelspule (2) zwei parallel zueinander angeordnete kreisrunde Scheiben (22, 27) aufweist, zwischen denen ein Wickelraum gebildet ist und wobei in der auf der der Grundplatte (11) abgewandten Seite angeordneten oberen Scheibe (22) eine Ausnehmung (25) zur Durchführung eines Miniklinkensteckers (71) angeordnet ist, wobei die obere Scheibe (22) auf ihrer Oberseite eine Aufnahme für einen Miniklinkenstecker (71) aufweist, wobei die obere Scheibe (22) auf ihrer Oberseite einen umlaufenden Steg (23) aufweist, in den eine Auslassöffnung (231) für ein Kabel (72) eingebracht ist und der einen Aufnahmeraum (24) für einen Miniklinkenstecker (71) begrenzt, wobei die Ausnehmung (25) der oberen Scheibe durch einen Schlitz gebildet ist, der sich zwischen zwei gegenüberliegenden Stellen des umlaufenden Steges (23) erstreckt und dessen Breite so dimensioniert ist, dass ein Miniklinkenstecker (71) durchführbar ist, **dadurch gekennzeichnet, dass** unterhalb der durch einen Schlitz gebildeten Ausnehmung (25) in der unteren Scheibe (27) parallel zu dem Schlitz eine Führung für einen Miniklinkenstecker (72) in Form einer Einbuchtung (28) angeordnet ist.

2. Vorrichtung zur Aufbewahrung eines Kopfhörers oder Ohrhörers, umfassend eine Grundplatte (11) mit einer orthogonal zu dieser angeformten Achse (14), auf der eine Wickelspule (2) drehbar gelagert ist, wobei die Wickelspule (2) zwei parallel zueinander angeordnete kreisrunde Scheiben (22, 27) aufweist, zwischen denen ein Wickelraum gebildet ist und wobei in der auf der der Grundplatte (11) abgewandten Seite angeordneten oberen Scheibe (22) eine Ausnehmung (25) zur Durchführung eines Miniklinkensteckers (71) angeordnet ist, wobei die obere Scheibe (22) auf ihrer Oberseite eine Aufnahme für einen Miniklinkenstecker (71) aufweist, wobei die obere Scheibe (22) auf ihrer Oberseite einen umlaufenden Steg (23) aufweist, in den eine Auslassöffnung (231) für ein Kabel (72) eingebracht ist und der einen Aufnahmeraum (24) für einen Miniklinkenstecker (71) begrenzt, wobei die Ausnehmung (25) der oberen Scheibe durch eine Bohrung gebildet ist, **dadurch gekennzeichnet, dass** in die untere Scheibe (27) eine mit dieser Bohrung fluchtende Ausnehmung (29) eingebracht ist, die in einer Position der Wickelspule (2) mit einer in die Grundplatte (11) eingebrachten Durchführung (17) derart fluchtet, dass in dieser Position der Wickelspule (2) ein Miniklinkenstecker (71) durch die Ausnehmungen (25, 29) geführt in den Aufnahmeraum (24) einführbar ist.

3. Vorrichtung nach Anspruch 2, **dadurch gekennzeichnet, dass** die Ausnehmung (29) der unteren Scheibe (27) sowie die Durchführung (17) der Grundplatte (11) jeweils durch eine der durch eine Bohrung gebildeten Ausnehmung (25) der oberen Scheibe (22) entsprechende Bohrung gebildet ist, von der ausgehend ein Schlitz bis zum Außenrand der unteren Scheibe (27) bzw. der Grundplatte (11) geführt ist.

4. Vorrichtung nach einem der vorgenannten Ansprüche, **dadurch gekennzeichnet, dass** die Achse (14) an ihrem freien Ende Rastnasen (15) aufweist, mittels der die Wickelspule (2) axial auf der Achse (14) fixiert ist.

5. Vorrichtung nach einem der vorgenannten Ansprüche, **dadurch gekennzeichnet, dass** die Grundplatte (11) zumindest bereichsweise umlaufend eine Außenwandung (12) aufweist, die eine Auslassöffnung (13) aufweist und die den Umfang der oberen Scheibe (22) zumindest bereichsweise umgibt.

6. Vorrichtung nach Anspruch 5, **dadurch gekennzeichnet, dass** die auf der der Grundplatte (11) zugewandten Seite angeordnete untere Scheibe (27) einen kleineren Außendurchmesser aufweist, als die obere Scheibe (22).

7. Vorrichtung nach einem der vorgenannten Ansprüche, **dadurch gekennzeichnet, dass** auf der oberen Scheibe (22) auf ihrer der unteren Scheibe (27) abgewandten Oberseite Mulden und/oder Erhebungen zum manuellen Drehen der Wickelspule (2) angeordnet sind.

8. Vorrichtung nach einem der vorgenannten Ansprüche, **dadurch gekennzeichnet, dass** auf der Oberseite der oberen Scheibe (22) zwei parallel zueinander angeordnete Rastarme (222) zur Aufnahme eines Miniklinkensteckers (71) angeformt sind.

9. Vorrichtung nach einem der vorgenannten Ansprüche, **dadurch gekennzeichnet, dass** der durch den Steg (23) begrenzte Aufnahmeraum (24) durch einen lösbar befestigten Deckel (3) abgedeckt ist.

10. Vorrichtung nach Anspruch 8 und 9, **dadurch gekennzeichnet, dass** an dem Deckel (3) an seiner den Rastarmen (222) zugewandten Seite parallel zueinander zwei Stege (33) angeformt sind, welche an den Rastarmen (222) außen anliegen.

11. Vorrichtung nach einem der vorgenannten Ansprüche, **dadurch gekennzeichnet, dass** die untere Scheibe (27) an ihrer der Grundplatte (11) zugewandten Seite eine Aufnahme für eine Feder, vorzugsweise eine Spiralfeder aufweist, wobei an der Grundplatte (11) ein Feststellhebel (5) angeordnet ist, über den die Wickelspule (2) in verschiedenen Drehpositionen entgegen der Federkraft der Feder fixierbar ist.

12. Vorrichtung nach Anspruch 11, **dadurch gekennzeichnet, dass** an der unteren Scheibe (27) umlaufend Rastkerben (272) eingeformt sind, die mit dem Feststellhebel (5) zusammenwirken und über welche die Wickelspule (2) fixierbar ist.

13. Vorrichtung nach einem der vorgenannten Ansprüche, **dadurch gekennzeichnet, dass** die Grundplatte (11) mit der Rückwand eines Smartphones oder mit der Rückwand (61) einer Schutzhülle (6) für ein Smartphone verbunden ist.

14. Vorrichtung nach Anspruch 13, **dadurch gekennzeichnet, dass** die Grundplatte (11) an das Smartphone oder die Schutzhülle (6) eines Smartphones derart angeformt ist, dass sie gleichzeitig zumindest einen Teil der Rückwand des Smartphones bzw. der Schutzhülle bildet.

15. Vorrichtung nach Anspruch 13, **dadurch gekennzeichnet, dass** die Grundplatte (11) mit dem Smartphone bzw. der Schutzhülle (6) lösbar verbunden ist.

16. Vorrichtung nach Anspruch 15, **dadurch gekennzeichnet, dass** die Grundplatte (11) Rastmittel aufweist, die mit an dem Smartphone bzw. an der Schutzhülle angeordneten Rastmitteln lösbar verrastet sind.

17. Vorrichtung nach Anspruch 16, **dadurch gekennzeichnet, dass** an der Grundplatte (11) wenigstens ein Flügel (19) angeformt ist, der in eine an der Rückwand des Smartphones bzw. der Schutzhülle angeordnete Aufnahme einschiebbar ist.

## Claims

1. Apparatus for storing headphones or earphones comprising a base plate (11) with an axis (14) orthogonally moulded to same, on which a winding spool (2) is rotatably mounted, wherein the winding spool (2) has two parallel circular discs (22, 27), between which a winding space is formed and wherein in the upper disc (22) arranged on the side facing away from the base plate (11) a recess (25) for the passage of a mini jack plug (71) is arranged, wherein the upper disc (22) has a receptacle for a mini jack plug (71) on its upper side, wherein the upper disc (22) has a circumferential web (23) on its upper side, in which an outlet (231) for a cable (72) is inserted and which delimits a receiving space (24) for a mini jack plug (71), wherein the recess (25) of the upper disc is formed by a slot, which extends between two opposite locations of the circumferential web (23) and whose width is dimensioned in a way that a mini jack plug (71) can be passed through, **characterised in that** below the recess (25) in the lower disc (27) formed by a slot, parallel to the slot, a guide for a mini jack plug (71) in the form of an indentation (28) is arranged.

2. Apparatus for storing headphones or earphones comprising a base plate (11) with an axis (14) orthogonally moulded to same, on which a winding spool (2) is rotatably mounted, wherein the winding spool (2) has two parallel circular discs (22, 27), between which a winding space is formed and wherein in the upper disc (22) arranged on the side facing away from the base plate (11) a recess (25) for the passage of a mini jack plug (71) is arranged, wherein the upper disc (22) has a receptacle for a mini jack plug (71) on its upper side, wherein the upper disc (22) has a circumferential web (23) on its upper side, in which an outlet (231) for a cable (72) is inserted and which delimits the receiving space (24) for a mini jack plug (71), wherein the recess (25) of the upper disc is formed by a bore, **characterised in that** in the lower disc (27) a recess (29) aligned with this bore is inserted, which in a position of the winding spool (2) aligns with the passage (17) inserted in the base plate (11) in a way that in this position of the winding spool (2) a mini jack plug (71) guided through the recesses (25, 29) is insertable in the receiving space (24).

3. Apparatus according to claim 2, **characterised in that** the recess (29) of the lower disc (27) as well as the passage (17) of the base plate (11) are respectively formed by a bore corresponding to the recess (25) of the upper disc (22) formed by a bore, from which a slot is guided to the outer edge of the lower disc (27) or the base plate (11).

4. Apparatus according to one of the previous claims, **characterised in that** the axis (14) has latches (15) at its free end, by means of which the winding spool (2) is axially fixed to the axis (14).

5. Apparatus according to one of the previous claims, **characterised in that** the base plate (11) has an at least partially circumferential outer wall (12), which has an outlet (13) and which at least partially surrounds the circumference of the upper disc (22).

6. Apparatus according to claim 5, **characterised in that** the lower disc (27) arranged on the side facing the base plate (11) has a smaller outer diameter than the upper disc (22).

7. Apparatus according to one of the previous claims, **characterised in that** on the upper disc (22) on its upper side facing away from the lower disc (27) hollows and/or elevations are provided for manual rotation of the winding spool (2).

8. Apparatus according to one of the previous claims, **characterised in that** two parallel latching arms (222) for receiving a mini jack plug (71) are moulded on the upper side of the upper disc (22).

9. Apparatus according to one of the previous claims, **characterised in that** the receiving space (24) delimited by the web (23) is covered by a detachably fastened lid (3).

10. Apparatus according to claims 8 and 9, **characterised in that** two parallel webs (33) are moulded on the lid (3) on its side facing latching arms (222), which rest outside on the latching arms (222).

11. Apparatus according to one of the previous claims, **characterised in that** the lower disc (27) on its side facing base plate (11) has a receptacle for a spring, preferably a coil spring, wherein at the base plate (11) a locking lever (5) is arranged, via which the winding spool (2) is fixable in different rotating positions against the spring force of the spring.

12. Apparatus according to claim 11, **characterised in that** at the lower disc (27) locking notches (272) are circumferentially moulded-in, which interact with the locking lever (5) and via which the winding spool (2) is fixable.

13. Apparatus according to one of the previous claims, **characterised in that** the base plate (11) is connected to the back panel of a smartphone or with the back panel (61) of a protective case (6) for a smartphone.

14. Apparatus according to claim 13, **characterised in that** the base plate (11) is moulded to the smartphone or the protective case (6) of a smartphone in a way that it simultaneously forms at least a part of the back panel of the smartphone or the protective case.

15. Apparatus according to claim 13, **characterised in that** the base plate (11) is releasably connected to the smartphone or the protective case (6).

16. Apparatus according to claim 15, **characterised in that** the base plate (11) has locking means, which are releasably locked with the locking means arranged at the smartphone or the protective case.

17. Apparatus according to claim 16, **characterised in that** at least one wing (19) is moulded to the base plate (11), which is insertable in a receptacle arranged at the back panel of the smartphone or the protective case.

## Revendications

1. Dispositif pour ranger un écouteur ou une oreillette, comprenant une plaque de base (11) avec un axe (14) modelé perpendiculairement contre cette dernière, axe sur lequel une bobine d'enroulement (2) est en appui lui permettant de tourner, sachant que la bobine d'enroulement (2) présente deux disques (22, 27) circulaires agencés parallèlement l'un à l'autre, entre lesquels est formé un espace d'enroulement et sachant que dans le disque supérieur (22) situé sur le côté ne regardant pas la plaque de base (11) est agencé un évidement (25) permettant de faire passer un mini-connecteur (71), sachant que le dessus du disque supérieur (22) présente un réceptacle recevant un mini-connecteur (71), sachant que le dessus du disque supérieur (22) présente une nervure (23) périphérique dans laquelle a été ménagé un orifice de sortie (231) d'un câble (72) et qui délimite un volume (24) recevant un mini-connecteur (71), sachant que l'évidement (25) du disque supérieur est formé par une fente s'étendant entre deux endroits se faisant face de la nervure périphérique (23) et dont la largeur est dimensionnée de sorte à pouvoir faire passer un mini-connecteur (71), **caractérisé en ce qu'**en dessous de l'évidement (25) formé par une fente dans le disque inférieur (27) est agencé, parallèle à la fente, un guidage destiné à un mini-connecteur (72) et ayant la forme d'un creux (28).

2. Dispositif pour ranger un écouteur ou une oreillette, comprenant une plaque de base (11) avec un axe (14) modelé perpendiculairement contre cette dernière, axe sur lequel une bobine d'enroulement (2) est en appui lui permettant de tourner, sachant que la bobine d'enroulement (2) présente deux disques (22, 27) circulaires agencés parallèlement l'un à l'autre, entre lesquels est agencé un espace d'enroulement et sachant que dans le disque supérieur (22) situé sur le côté ne regardant pas la plaque de base (11) est agencé un évidement (25) permettant de faire passer un mini-connecteur (71), sachant que le dessus du disque supérieur (22) présente un réceptacle recevant un mini-connecteur (71), sachant que le dessus du disque supérieur (22) présente une nervure (23) périphérique dans laquelle a été ménagée un orifice de sortie (231) d'un câble (72) et qui délimite un volume (24) recevant un mini-connecteur (71), sachant que l'évidement (25) du disque supérieur est formé par un alésage, **caractérisé en ce que** dans le disque inférieur (27) a été ménagé un évidement (29) dans l'alignement de cet alésage, évidement qui dans une position de la bobine d'enroulement (2) se trouve dans l'alignement d'un passage (17) ménagé dans la plaque de base (11) de sorte que dans cette position de la bobine d'enroulement (2) il est possible d'introduire un mini-connecteur (71) dans le compartiment réceptacle (24) en le faisant passer à travers les évidements (25, 29).

3. Dispositif selon la revendication 2, **caractérisé en ce que** l'évidement (29) du disque inférieur (27) ainsi que le passage (17) que comporte la plaque de base (11) sont formés chacun par un alésage correspondant à l'évidement (25) - formé par un alésage - du disque supérieur (22), alésage premier cité depuis lequel une fente est guidée jusqu'à la paroi extérieure du disque inférieur (27) et de la plaque de base (11).

4. Dispositif selon l'une des revendications précédentes, **caractérisé en ce que** l'axe (14) présente en son extrémité libre des saillies de crantage (15) au moyen desquelles la bobine (2) d'enroulement est immobilisée axialement sur l'axe (14).

5. Dispositif selon l'une des revendications précédentes, **caractérisé en ce que** la plaque de base (11) présente au moins localement une paroi extérieure (12) périphérique, laquelle paroi présente un orifice de sortie (13) et entoure au moins localement la circonférence du disque supérieur (22).

6. Dispositif selon la revendication 5, **caractérisé en ce que** le disque inférieur (27) agencé sur le côté inférieur regardant la plaque de base (11) présente un diamètre extérieur inférieur à celui du disque supérieur (22).

7. Dispositif selon l'une des revendications précédentes, **caractérisé en ce que** sur le disque supérieur (22), sur le dessus ne regardant pas le disque inférieur (27), sont agencés des creux et/ou reliefs permettant de tourner manuellement la bobine d'enroulement (2).

8. Dispositif selon l'une des revendications précédentes, **caractérisé en ce que** sur le dessus du disque supérieur (22) ont été modelés deux bras de crantage (222) agencés parallèles l'un à l'autre, pour recevoir un mini-connecteur (71).

9. Dispositif selon l'une des revendications précédentes, **caractérisé en ce que** le volume réceptacle (24) délimité par la nervure (23) est recouvert d'un couvercle (3) fixé de manière détachable.

10. Dispositif selon les revendications 8 et 9, **caractérisé en ce que** contre le couvercle (3), sur son côté regardant les bras de crantage (222), deux nervures (33) ont été modelées parallèles l'une à l'autre, qui appliquent à l'extérieur contre les bras de crantage (222).

11. Dispositif selon l'une des revendications précédentes, **caractérisé en ce que** le disque inférieur (27), sur son côté regardant la plaque de base (11), présente un réceptacle pour ressort, de préférence un ressort hélicoïdal, sachant que contre la plaque de base (11) est agencé une manette d'immobilisation (5) via laquelle il est possible, en vainquant la force du ressort, d'immobiliser la bobine d'enroulement (2) sur différentes position de rotation.

12. Dispositif selon la revendication 11, **caractérisé en ce que** des entailles de crantage (272) périphériques ont été modelées contre le disque inférieur (27), entailles qui interagissent avec la manette d'immobilisation (5) et via lesquelles il est possible d'immobiliser la bobine d'enroulement (2).

13. Dispositif selon l'une des revendications précédentes, **caractérisé en ce que** la plaque de base (11) est reliée à la paroi arrière d'un smartphone ou à la paroi arrière (61) d'un étui de protection (6) pour smartphone.

14. Dispositif selon la revendication 13, **caractérisé en ce que** la plaque de base (11) contre le smartphone ou l'étui de protection (6) d'un smartphone est modelée de sorte à former simultanément au moins une partie de la paroi arrière du smartphone ou de l'étui de protection.

15. Dispositif selon la revendication 13, **caractérisé en ce que** la plaque de base (11) est reliée de manière détachable avec le smartphone et/ou l'étui de protection (6).

16. Dispositif selon la revendication 15, **caractérisé en ce que** la plaque de base (11) présente des moyens de crantage encrantés de manière détachable contre le smartphone et/ou contre l'étui de protection.

17. Dispositif selon la revendication 16, **caractérisé en ce qu'**au moins une ailette (19) a été modelée contre la plaque de base (11), ailette qu'il est possible d'insérer dans un réceptacle agencé contre la paroi arrière du smartphone et/ou de l'étui de protection.
